# EUROPÄISCHE PATENTANMELDUNG

(11) **EP 2 081 020 A2**
(43) Veröffentlichungstag der Anmeldung: **22.07.2009**
(21) Anmeldenummer: 08105859.6
(22) Anmeldetag: 25.11.2008
(51) Int. Cl.: G01N 27/419

(54) **Verfahren zum Betreiben eines Sensorelements zur Bestimmung der Konzentration von Gaskomponenten**

(30) Priorität: 15.01.2008 DE 102008004359
(71) Anmelder: ROBERT BOSCH GMBH, 70442 Stuttgart (DE)
(72) Erfinder: Wagner, Jens, 70191, Stuttgart (DE)

(57) **Zusammenfassung**

Ein Verfahren zum Betreiben eines Sensorelements zur Bestimmung der Konzentration von Gaskomponenten im Abgas von Brennkraftmaschinen mit einer äußeren Pumpelektrode (APE), mit einer inneren Pumpelektrode oder Nemst-Elektrode (IPN) und mit einer Referenzelektrode (RE), wobei zwischen Pumpstromregler und der äußeren Pumpelektrode (APE) ein Messwiderstand (R_{M}) und ein dazu parallel geschalteter Abgleichwiderstand (R_{A}) vorgesehen sind, ist **dadurch gekennzeichnet, dass** zur Feststellung einer Leitungsunterbrechung zu dem Abgleichwiderstand (R_{A}) das Potential der äußeren Pumpelektrode (APE) und der Pumpstrom (Ip) erfasst werden und der Pumpstromwert (Ip) zum Zeitpunkt eines Nernst-Sprungs im Potentialverlauf der äußeren Pumpelektrode (A-PE) bei unterschiedlichen Werten des Referenzpumpstroms erfasst und bei einer Abweichung dieser Pumpstromwerte (Ip) um ein vorgebbares Maß auf eine Leitungsunterbrechung zu dem Abgleichwiderstand (R_{A}) geschlossen wird.

## Beschreibung

Die Erfindung betrifft ein Verfahren zum Betreiben eines Sensorelements zur Bestimmung der Konzentration von Gaskomponenten im Abgas von Brennkraftmaschinen nach der Gattung der unabhängigen Ansprüche 1 und 6.

Gegenstand der vorliegenden Erfindung sind auch ein Computerprogramm sowie ein Computerprogrammprodukt mit einem Programmcode, der auf einem maschinenlesbaren Träger gespeichert ist, zur Durchführung des Verfahrens.

### Stand der Technik

Zur Bestimmung der Luftzahl werden sogenannte Breitband-Lambdasonden eingesetzt. Sie bestehen im Wesentlichen aus einer Kombination von herkömmlicher, als galvanische Zelle wirkender Konzentrationssonde (Nernst-Sonde) sowie einer Grenzstrom- oder "Pump"-zelle. An die Pumpzelle, die von gleicher Art ist wie eine übliche Konzentrationszelle wird lediglich von außen eine Spannung angelegt. Ist die Spannung konstant und groß genug, stellt sich ein "Grenzstrom" ein, der proportional zu dem Unterschied der Sauerstoffkonzentration auf beiden Seiten der Sonde ist. Mit einer variablen Pumpspannung kann auch unabhängig vom Konzentrationsgefälle ein O²⁻-Ionenstrom eingestellt werden. Mit dem Strom werden - polaritätsabhängig - Sauerstoffatome transportiert. Über einen Diffusionsspalt werden O²⁻-Ionen und Reduktionsmittel an die Konzentrationssonde transportiert. Eine elektronische Regelschaltung variiert über die Pumpspannung den O²⁻-Ionenstrom durch die Pumpzelle und regelt damit an der Konzentrationssonde den Zustand Lambda=1. Bei Luftüberschuss im Abgas, im sogenannten mageren Bereich, wird demgemäß Sauerstoff abgepumpt, wohingegen bei geringem Restsauerstoffgehalt des Abgases, im sogenannten fetten Bereich, durch Umkehrung der Pumpspannung Sauerstoff zugeführt wird. Der jeweilige Pumpstrom, der proportional zum Sauerstoff- oder Fettgasgehalt im Abgas ist, bildet das Ausgangssignal. Die Messung der Konzentration im Messhohlraum erfolgt anhand der Bestimmung der Nernst-Spannung zwischen der Nernst-Elektrode im Hohlraum und einer sauerstoffbespülten Referenzelektrode im Referenzraum. Derartige Sensoren gehen beispielsweise aus dem Fachbuch "Bosch Kraftfahrtechnisches Taschenbuch", 25. Auflage 2003 hervor, auf das vorliegend Bezug genommen wird.

Die Referenzelektrode wird dabei entweder über einen Referenzgaskanal oder über eine zusätzliche Sauerstoffpumpe ("gepumpte Referenz") mit Sauerstoff versorgt ("bespült").

Um eine derartige Sonde auf Betriebstemperatur zu bringen, ist eine Heizeinrichtung vorgesehen, die in den das Sensorelement bildenden Festelektrolyten eingebettet ist.

Der Pumpstrom wird üblicherweise über einen Messwiderstand im Motorsteuergerät gemessen. Um Fertigungsstreuungen der Diffusionsbarriere zu kompensieren, ist ein Abgleichwiderstand vorgesehen, der insbesondere der Sonde selbst zugeordnet ist und in einen Steckeranschluss oder ein Steckergehäuse eingesetzt ist. Der Abgleichwiderstand ist parallel zum Messwiderstand geschaltet.

Der Abgleich einer solchen Breitband-Lambdasonde geht beispielsweise aus der DE 201 06 750 U1 hervor. Bei Diffusionsbarrieren mit hohem Grenzstrom wird der Abgleichwiderstand niederohmig belassen, bei niedrigem Grenzstrom wird der Widerstand dadurch erhöht, dass mittels eines Lasers ein Einschnitt in ihm vorgenommen wird. Durch diesen Widerstand wird die Pumpstrom-Konzentrations-Kennlinie gedreht, sodass neben dem Abgleichpunkt auch alle anderen Punkte auf der Sollkennlinie liegen.

Ein Leitungsbruch der Sondenzuleitung kann bei den aus dem Stand der Technik bekannten Sensorelementen und Schaltungseinrichtungen nicht ohne Weiteres erkannt werden. Nach den Vorschriften der on board Diagnose II (OBD II) ist nun eine kontinuierliche Überwachung aller abgasrelevanten Bauelemente erforderlich. Es müssen daher auch Lambdasonden und die Sondenleitungen derartiger Lambdasonden überwacht werden.

Insbesondere muss überwacht werden, ob ein Kabelbruch vorliegt, der während des Betriebs des Fahrzeugs rein prinzipiell auftreten kann. Zur Überprüfung, ob die Leitungsverbindung, das heißt die elektrische Verbindung zum Abgleichwiderstand noch vorhanden ist, sind im Stand der Technik unterschiedliche Verfahren und Vorrichtungen bekannt. Üblicherweise wird hierbei das Signal während des sogenannten Schubabschneidens (Messung von 21Vol% O₂) ausgewertet.

Aus der WO 2004/053475 A1 ist darüber hinaus ein Verfahren und eine Anordnung bekannt geworden, bei der der Referenzpumpstrom erhöht oder reduziert wird. Aus der sich darauf einstellenden Signalreaktion wird auf erhöhte Leckströme in den Zuleitungen oder eine Vergiftung der Referenzkammer (niedriger O₂-Partialdruck) geschlossen. Nachteilig ist dabei, dass während dieser Auswertung die Sauerstoffkonzentration an der Lambdasonde konstant bleiben muss. Daher kann diese Auswertung nur über kurze Zeit erfolgen. Da nicht über längere Zeiträume gemessen werden kann, wird die Messgenauigkeit auch durch die Trägheit des Systems - z. B. wegen Anti-Aliasing-Filtern - reduziert.

Aus der EP 0 444 674 A2 geht eine Detektionsvorrichtung für das Luft-KraftstoffVerhältnis bei Breitband-Lambdasonden hervor, welche das elektrochemische Potential der Pumpelektrode im Abgas, das sogenannte Nernst-Potential auswertet. Dieses Potential zeigt am stöchiometrischen Punkt eine ähnliche Charakteristik wie an sich bekannte Zweipunkt-Lambdasonden, das heißt einen signifikanten Sprung. Nachteilig bei dieser Vorrichtung ist es nun, dass im Motorabgas aufgrund einer unvollständigen Verbrennung höhere Konzentrationen von Sauerstoff, Kohlenmonoxid und Wasserstoff vorliegen. Hierdurch liegt der Nernst-Sprung an den Pumpelektroden nie genau im stöchiometrischen Punkt, wodurch die Messgenauigkeit eingeschränkt wird.

Der Erfindung liegt daher die Aufgabe zugrunde ein Verfahren zum Betreiben eines Sensorelements zur Bestimmung der Konzentration von Gaskomponenten im Abgas von Brennkraftmaschinen zu vermitteln, welches die zuverlässige Erkennung einer Leitungsunterbrechung zum Abgleichwiderstand weitestgehend unabhängig vom Betriebspunkt der Brennkraftmaschine ermöglicht. Das Verfahren soll darüber hinaus nur mit geringem Zusatzaufwand bei bereits bestehenden Auswerteverfahren implementiert werden können.

### Offenbarung der Erfindung

### Vorteile der Erfindung

Diese Aufgabe wird durch ein Verfahren zum Betreiben eines Sensorelements zur Bestimmung der Konzentration von Gaskomponenten in einem Gasgemisch, insbesondere im Abgas von Brennkraftmaschinen, durch die Merkmale des Anspruchs 1 gelöst.

Grundidee der Erfindung ist es, zur Feststellung einer Leitungsunterbrechung zu dem Abgleichwiderstand den Referenzpumpstrom zu variieren und dabei den Verlauf des Pumpstroms während eines Nernst-Sprungs auszuwerten. Aus der hierbei auftretenden Verschiebung des Nernst-Sprungs über dem Pumpstromverlauf kann auf eine Leitungsunterbrechung geschlossen werden. Vorteilhaft bei diesem Verfahren ist es, dass es durch eine Variation des Motorabgases nicht beeinflusst wird, da das Sensorsignal immer nur zum Zeitpunkt des Nernst-Sprungs ausgewertet wird. Sehr vorteilhaft ist auch, dass das Verfahren während des normalen Motorbetriebs bei entsprechenden fett-mager-Durchgängen ausgeführt und mehrfach wiederholt werden kann, wodurch sich die Messgenauigkeit verbessern lässt.

Durch die in den abhängigen Ansprüchen aufgeführten Maßnahmen sind vorteilhafte Ausgestaltungen und Weiterbildungen des in dem unabhängigen Anspruch angegebenen Verfahrens möglich.

So sieht eine sehr vorteilhafte Ausgestaltung vor, den Verlauf des Pumpstroms jeweils getrennt für die Nernst-Sprünge auszuwerten, die bei fett-mager-Durchgängen bzw. bei mager-fett-Durchgängen auftreten. Außerdem wird das System hierdurch robuster gegen Totzeiten und Trägheit im System: Da die Signalaufbereitungen der Nernst-Spannung und des Pumpstroms unterschiedlich verarbeitet werden müssen, repräsentieren die aufbereiteten Signale nicht mehr exakt den gleichen Zeitpunkt (beispielsweise verschoben durch Anti-Aliasing-Filter vor dem AD-Konverter und weitere digitale Filter zur Störunterdrückung). Repräsentiert beispielsweise das Pumpstromsignal einen älteren Wert als die aufbereitete Nernst-Spannung, so ist das Pumpstromsignal bei Erkennung eines mager-fett-Sprungs noch etwas zu mager. Indem nur die ausgewerteten Pumpströme bei mager-fett-Sprüngen miteinander verglichen werden, ist das Verfahren gegenüber solchen Verschiebungen unempfindlicher. Durch getrennte aber gleichzeitige Auswertung der mager-fett- bzw. der fett-mager-Sprünge wird die Auswertehäufigkeit erhöht.

Eine besonders vorteilhafte Ausgestaltung sieht vor, den Verlauf des Pumpstroms bei Nernst-Sprüngen entweder bei einer Mehrzahl von hintereinander auftretenden fett-mager-Durchgängen oder bei einer Mehrzahl von hintereinander auftretenden mager-fett-Durchgängen auszuwerten. Hierdurch können Fehler durch zeitliche Trägheit des Pumpstromsignals durch diese getrennte Auswertung von fett-mager-Durchgängen und mager-fett-Durchgängen minimiert werden.

Gemäß einer vorteilhaften Ausgestaltung ist vorgesehen, den Verlauf des Pumpstroms bei Nernst-Sprüngen durch exponentielle Glättung mehrerer Auswertungen zu bestimmen. Hierdurch kann die Änderung des Pumpstroms sehr genau ausgewertet werden.

Es kann vorteilhaft sein, zusätzlich die Änderung des Referenzpumpstroms zu bewerten. Dadurch können Toleranzen der Stromquellen für den Referenzpumpstrom kompensiert werden. Die Erfindung wird daher auch gelöst durch ein Verfahren mit den Merkmalen des Anspruchs 6, bei dem die Pumpstromregelung angehalten, der Referenzpumpstrom geändert und aus der Potentialänderung in der äußeren Pumpelektrode auf die Pumpstromänderung geschlossen wird.

Diese Auswertung kann unabhängig von der oben beschriebenen Diagnose durchgeführt werden. Vorteilhafterweise wird die Pumpstromänderung aufgrund dieser Verfahrensschritte in einer Phase mit geringem Abgasmassenstrom durchgeführt, während der ein fett-mager-Durchgang oder mager-fett-Durchgang im Abgas der Brennkraftmaschine unwahrscheinlich ist oder sogar durch eine geeignete Vorsteuerung verhindert werden kann. Während des Abschaltens der Pumpstromregelung ist eine Messung des Abgaslambdas nicht möglich. Wegen des geringen Abgasmassenstroms ist der Emissionseinfluss durch das Abschalten der Pumpstromregelung aber gering.

### Kurze Beschreibung der Zeichnungen

Ausführungsbeispiele der Erfindung sind in den Zeichnungen dargestellt und in der nachfolgenden Beschreibung näher erläutert.

Es zeigen:

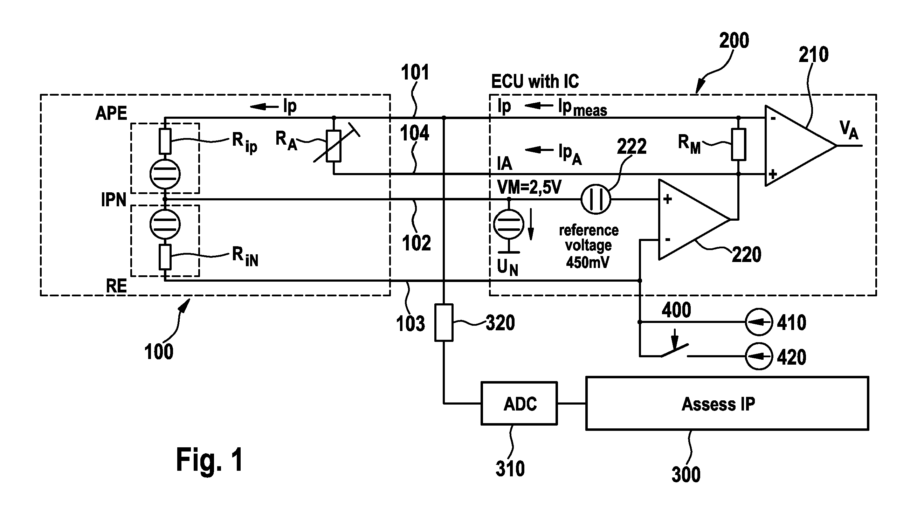

- Fig. 1: schematisch eine Schaltungsanordnung zur Durchführung des erfindungsgemäßen Verfahrens;
- Fig. 2: schematisch den Pumpspannungsverlauf über der Luftzahl einer Breitband-Lambdasonde während eines Nernst-Sprunges und
- Fig. 3: schematisch ein Ablaufdiagramm zur Erläuterung einer Ausgestaltung des erfindungsgemäßen Verfahrens.

### Ausführungsformen der Erfindung

Eine Breitbandlambda-Sonde 100 umfasst eine Pumpzelle gebildet aus einer äußeren Pumpelektrode APE und einer inneren Pumpelektrode oder Nernst-Elektrode IPN sowie eine Referenzzelle oder Nernstzelle gebildet aus der Referenzelektrode RE und der inneren Pumpelektrode oder Nernst-Elektrode IPN. Sowohl die Pumpzelle als auch die Nernstzelle bilden jeweils Spannungsquellen und in Reihe zu diesen geschaltete Widerstände Rᵢₚ bzw. R_{iN}.

Die äußere Pumpelektrode APE ist über eine erste Leitung 101 mit einer Schaltungsanordnung 200 verbunden. Die innere Pumpelektrode oder Nernst-Elektrode IPN ist über eine Leitung 102 mit der Schaltungsanordnung 200 verbunden und die Referenzelektrode RE ist über eine Leitung 103 mit der Schaltungsanordnung 200 verbunden. Eine weitere Leitung 104 führt zu einem Abgleichwiderstand R_{A}, der der Breitband-Lambdasonde 100 zugeordnet und beispielsweise in deren Steckergehäuse angeordnet ist.

Der Abgleichwiderstand R_{A} ist einem Messwiderstand R_{M} parallel geschaltet, der Teil der Schalteranordnung 200 ist und dort zwischen dem invertierenden und nichtinvertierenden Eingang eines Operationsverstärkers 210 geschaltet ist, der als Verstärker für das Ausgangssignal V_{A} fungiert.

Mittels der Referenzleitung 103 wird der Referenzelektrode RE ein Referenzpumpstrom zugeführt, der durch Stromquellen 410 bzw. 420 erzeugt wird. Der Referenzpumpstrom kann beispielsweise durch das Zu- und Abschalten mittels eines Schalters 400 variiert werden. Im Normalbetrieb ist nur die Stromquelle 410 zugeschaltet. Durch Betätigen des Schalters 400 wird die Stromquelle 420 zugeschaltet und der Referenzpumpstrom erhöht. Diese Leitung ist außerdem mit dem invertierenden Eingang eines Differenzverstärkers 220 verbunden, dessen Ausgang einen Pumpstrom bereitstellt, der über den Messwiderstand und die Leitung 101 der äußeren Pumpelektrode APE zugeführt wird. Der Pumpstrom Ip ist identisch mit dem Sensorsignal und wird durch den Verstärker 210 erfasst.

Über der Referenzelektrode RE und der inneren Pumpelektrode IPN bildet sich ein elektrochemisches Potenzial, dessen Spannung über die Leitung 103 abgegriffen und dem invertierenden Eingang des Differenzverstärkers 220 zugeführt wird. Über die Leitung 102 wird die innere Pumpelektrode IPN mit einer Spannungsquelle VM auf einer virtuellen Masse gehalten. Über die Referenzspannungsquelle 222, die eine Referenzspannung in Höhe von 450 mV auf an sich bekannte Weise erzeugt, wird der nichtinvertierende Eingang des Differenzverstärkers auf einem 450 mV höheren Potenzial gehalten.

Der von dem Differenzverstärker 220 erzeugte Pumpstrom I_{P}, wie er der äußeren Pumpelektrode RPE zugeführt wird, wird nun durch den aus Messwiderstand R_{M} und Abgleichwiderstand gebildeten Stromteiler in zwei Teile geteilt, einen Messpumpstrom Ipₘₑₐₛ und einen Abgleichpumpstrom Ip_{A}. Der Messpumpstrom Ipₘₑₐₛ wird über die Leitung 101 der äußeren Pumpelektrode APE zugeführt, der Abgleichpumpstrom Ip_{A} wird über die Leitung 104 dem Abgleichwiderstand R_{A} zugeführt. Durch den aus Abgleichwiderstand R_{A} und Mess- oder Arbeitswiderstand R_{M} gebildeten Stromteiler erfolgt der Abgleich der Kennlinie der Breitband-Lambdasonde. Wie erwähnt, ist der Abgleichwiderstand R_{A} bevorzugt in einem Steckergehäuse der Sonde angeordnet. Bei Diffusionsbarrieren mit hohem Pumpstrom wird der Abgleichwiderstand R_{A} niederohmig belassen und bei niedrigem Pumpstrom wird ein Laserschnitt in den Abgleichwiderstand R_{A} auf an sich bekannte Weise eingebracht, der den Widerstandswert erhöht. Auf diese Weise kann die Kennlinie auf an sich bekannte Weise gedreht werden, sodass neben dem Abgleichpunkt auch alle anderen Punkte auf einer Sollkennlinie liegen.

Um nun zu prüfen, ob die Leitung 104 zu dem Abgleichwiderstand R_{A} unterbrochen ist und insoweit ein ordnungsgemäßer Betrieb der Breitband-Lambdasonde und der Schaltungsanordnung nicht mehr gewährleistet ist, sieht das erfindungsgemäße Verfahren vor, das Potential der äußeren Pumpelektrode APE gegenüber beispielsweise einer Referenz, beispielsweise der Fahrzeugmasse, zu erfassen. Dies erfolgt zum Beispiel über einen Widerstand 320 und einen Analog-Digital-Konverter 310 in einer Schaltungsanordnung 300.

Üblicherweise wird eine Brennkraftmaschine zyklisch leicht mager und leicht fett betrieben. Durch Auswertung des bei einem fett-mager-Durchgang sich einstellenden Nernst-Sprungs kann nun das Sensorsignal am stöchiometrischen Punkt bestimmt werden.

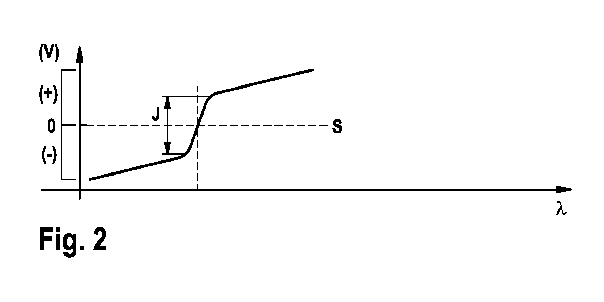

Ein solcher Nernst-Sprung ist schematisch in Figur 2 dargestellt, in der die Spannung an der äußeren Pumpelektrode APE über der Luftzahl Lambda dargestellt ist. Im Bereich eines Übergangs von einem fetten zu einem mageren Zustand findet ein signifikanter Sprung J des Spannungssignals statt. An diesem sogenannten Nernst-Sprung wird nun der Pumpstrom I_{P} ausgewertet.

Der Referenzpumpstrom entzieht dem Volumen an der inneren Pumpelektrode IPN O²⁻-Ionen. Bei einem Sauerstoffüberschuss im Abgas wird dadurch der Pumpstrombedarf an der Pumpzelle reduziert. Bei Sauerstoffmangel im Abgas muss deswegen ein entsprechender negativerer Pumpstrom bereitgestellt werden. Der Referenzpumpstrom erzeugt also eine Verschiebung der Kennlinie. Ohne Referenzpumpstrom wäre bei Lambda=1 kein Pumpstrom notwendig. Idealerweise muss bei Lambda=1 der Pumpstrom genau den Referenzpumpstrom kompensieren. Der Wert des Pumpstroms über die Parallelschaltung von R_{M} und R_{A} während eines Nernst-Sprungs entspricht damit der Höhe des Referenzpumpstroms. Es wird daher aber nur der Mess-Pumpstrom über R_{M} erfasst. Da R_{M} bekannt ist, kann damit auf R_{A} geschlossen werden. Ist das ermittelte R_{A} unzulässig hoch, so liegt eine Leitungsunterbrechung vor.

Aufgrund von Leckströmen, Fertigungsstreuungen sowie Querwirkungen mit einzelnen Abgaskomponenten stellt sich bei realen Betriebsbedingungen bei Lambda=1 der Pumpstrom nicht genau auf den Referenzpumpstrom ein. Da diese Effekte sich aber zeitlich nur sehr langsam ändern, wird sich eine sprunghafte Änderung des Referenzpumpstroms genau in einer Verschiebung des Pumpstroms beim Nernst-Sprung auswirken. Es wird daher vor und nach einem Sprung der Messpumpstrom über R_{M} während eines Nernst-Sprungs ermittelt. Aus der gemessenen Änderung des Mess-Pumpstroms ΔIpₘₑₐₛ und der eigentlichen Änderung des Referenzpumpstroms ΔIp_{ref} kann auf die Änderung des Abgleichstroms AIp_{A} = ΔIp_{ref} -ΔIpₘₑₐₛ geschlossen werden. Damit kann bei bekanntem R_{M} wieder auf den parallel geschalteten Abgleichwiderstand R_{A} = (ΔIpₘₑₐₛ / ΔIp_{A}) R_{M} geschlossen werden. Ist die Verbindung zum Abgleichwiderstand R_{A} unterbrochen, so zeigt sich eine Änderung des Referenzpumpstroms, der über die Leitung 103 der Nernstzelle zugeführt wird vollständig als Änderung des Pumpstroms I_{P}. Bei einer elektrischen Verbindung ist diese Änderung dagegen deutlich geringer. Wird nun ein zu hoher Abgleichwiderstand ermittelt, so kann auf eine unterbrochene elektrische Verbindung geschlossen werden.

Der Vorteil dieses Verfahrens liegt darin, dass es kein stationäres Lambda des Motorabgases benötigt, da das Sensorsignal immer nur zum Zeitpunkt des Nernst-Stroms ausgewertet wird. Fehler durch zeitliche Trägheit des Signals können durch getrennte Auswertung von fett-mager-Durchgängen und mager-fett-Durchgängen minimiert werden. Sehr vorteilhaft kann auch eine Auswertung während des normalen Betriebs der Brennkraftmaschine bei mehreren hintereinander folgenden fett-mager-Durchgängen oder mager-fett-Durchgängen erfolgen.

Ein Nernst-Sprung wird durch Auswerten der Steigung der Spannung an der äußeren Pumpelektrode ermittelt. Ein Nernst-Sprung liegt immer dann vor, wenn die Steigung der Spannung über der Luftzahl einen vorgebbaren Schwellenwert überschreitet.

Eine vorteilhafte Ausgestaltung sieht vor, den Verlauf des Pumpstroms jeweils getrennt für Nernst-Sprünge auszuwerten, die bei fett-mager-Durchgängen bzw. bei mager-fett-Durchgängen auftreten. Hierdurch wird das System darüber hinaus robuster gegen Totzeiten und Trägheit. Da nämlich die Signalaufbereitungen der Nernst-Spannung und des Pumpstroms unterschiedlich verarbeitet werden müssen, repräsentieren die aufbereiteten Signale nicht mehr exakt den gleichen Zeitpunkt. Sie sind beispielsweise durch Anti-Aliasing-Filter vor dem AD-Konverter 310 (nicht dargestellt) und/oder weitere digitale Filter zur Störunterdrückung (nicht dargestellt) verschoben. Wenn nun das Pumpstromsignal einen älteren Wert als die aufbereitete Nernst-Spannung repräsentiert, so ist das Pumpstromsignal bei Erkennung eines mager-fett-Sprungs noch etwas zu mager. Indem nur die ausgewerteten Pumpströme bei mager-fett-Sprüngen miteinander verglichen werden, ist das Verfahren gegenüber solchen Verschiebungen unempfindlicher. Durch getrennte aber gleichzeitige Auswertung der mager-fett- bzw. der fett-mager-Sprünge wird die Auswertehäufigkeit erhöht.

Darüber hinaus kann vorgesehen sein, den Verlauf des Pumpstroms bei Nernst-Sprüngen entweder bei mehreren hintereinander auftretenden fett-mager-Durchgängen oder bei mehreren hintereinander auftretenden mager-fett-Durchgängen auszuwerten. Hierdurch können Fehler bedingt durch die zeitliche Trägheit des Pumpstromsignals minimiert werden.

Bevorzugt wird der Verlauf des Pumpstroms bei den Nernst-Sprüngen durch exponentielle Glättung mehrerer Auswertungen bestimmt. Hierdurch kann die Genauigkeit der Auswertung wesentlich erhöht werden.

Die exponentielle Glättung mehrerer Pumpstromwerte zum Zeitpunkt eines Nernst-Sprungs findet dabei jeweils bei gleichem Referenzpumpstrom und jeweils für fett-mager- bzw. mager-fett-Durchgänge getrennt statt.

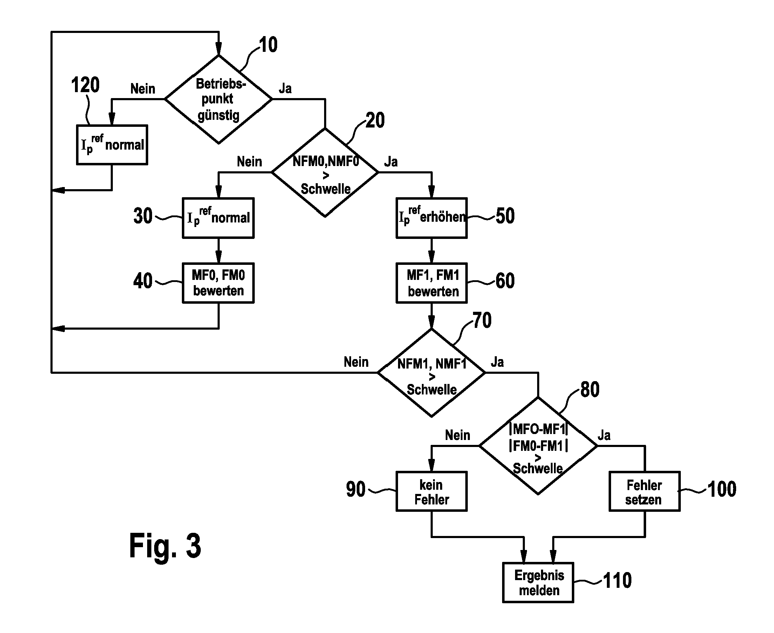

In Verbindung mit Fig. 3 wird ein Ausführungsbeispiel des erfindungsgemäßen Verfahrens erläutert.

In einem Schritt 10 wird geprüft, ob ein günstiger Betriebspunkt für die Diagnose vorliegt. Sofern kein günstiger Betriebspunkt vorliegt, wird in einem Schritt 120 der eventuell erhöhte Referenzpumpstrom Ipref wieder auf normales Niveau reduziert. Ansonsten wird in einem Schritt 20 geprüft, ob die Anzahl der beobachteten Nernst-Sprünge von fett nach mager (NFM0) bzw. von mager nach fett (NMF0) bereits eine Schwelle überschritten haben. Solange das nicht der Fall ist, wird in einem Schritt 30 der Referenzpumpstrom Ipref auf Normalniveau gehalten. Bei Vorliegen eines Nernst-Sprunges wird in einem Schritt 40 der Pumpstrom Ip zum Zeitpunkt des Nernst-Sprunges durch exponentielle Glättung bewertet und der entsprechende Zähler NMF0 bzw. NFM0 erhöht (z. B. MF0 = a*MF0 + (1-a)*Ip; NMF0 = NMF0+1). Der jeweils geglättete Wert des Pumpstroms während der Nernst-Sprünge fett-mager bzw. mager-fett wird in Speicherzellen FM0 bzw. MF0 gespeichert.

Wurde im Schritt 20 festgestellt, dass bereits ausreichend Sprünge mit Ipref auf Normalniveau ausgewertet wurden (NFM0, NMF0 > Schwelle), so wird in einem Schritt 50 der Referenzpumpstrom Ipref erhöht. Während der folgenden Nernst-Sprünge wird ebenso der Pumpstrom Ip und die Nernst-Spannung beobachtet. In einem Schritt 60 wird das Ergebnis der exponentiellen Glättung in den Speicherzellen FM1 bzw. MF1 und die Anzahl der Beobachtungen in den Zählern NFM1 bzw. NMF1 gespeichert.

Sobald in Schritt 70 festgestellt wird, dass auch die Zähler NFM1 und NMF1 eine Schwelle überschritten haben, werden in einem Schritt 80 die ermittelten Werte des Pumpstroms mit normalem und erhöhtem Referenzpumpstrom Ipref verglichen. Überschreiten die Abweichungen |MF0-MF1| und |FM0-FM1| eine Schwelle, so wird in einem Schritt 100 auf einen Fehler geschlossen. Sofern die Schwellen zu diesem Zeitpunkt nicht überschritten sind, kann in einem Schritt 90 auf eine fehlerfreie elektrische Verbindung zu dem Abgleichwiderstand geschlossen werden. In einem Schritt 110 wird das Ergebnis der Diagnose an einen zentralen Fehlerspeicher gemeldet.

Bei einer zusätzlichen Ausgestaltung des Verfahrens, die optional zu dem vorbeschriebenen Verfahren eingesetzt werden kann, ist vorgesehen, die Pumpstromregelung anzuhalten und danach den Referenzpumpstrom zu ändern. Aus der Potentialänderung an der äußeren Pumpelektrode APE kann auf die Größenordnung der Pumpstromänderung geschlossen werden. Dies wird vorzugsweise während einer Phase mit geringem Abgasmassenstrom durchgeführt, während der ein fett-mager-Durchgang im Motorabgas unwahrscheinlich ist. Dadurch können Toleranzen in der Vorsteuerung des Referenzpumpstroms abgeglichen werden. Dieses Verfahren kann getrennt von dem vorstehend beschriebenen Verfahren zur Erfassung des Pumpstroms während eines Nernst-Sprungs vorgenommen werden.

## Patentansprüche

1. Verfahren zum Betreiben eines Sensorelements zur Bestimmung der Konzentration von Gaskomponenten im Abgas von Brennkraftmaschinen mit einer äußeren Pumpelektrode (APE), mit einer inneren Pumpelektrode oder Nernst-Elektrode (IPN) und mit einer Referenzelektrode (RE), wobei zwischen Pumpstromregler und der äußeren Pumpelektrode (APE) ein Messwiderstand (R_{M}) und ein dazu parallel geschalteter Abgleichwiderstand (R_{A}) vorgesehen sind, **dadurch gekennzeichnet, dass** zur Feststellung einer Leitungsunterbrechung zu dem Abgleichwiderstand (R_{A}) das Potential der äußeren Pumpelektrode (APE) und der Pumpstrom (Ip) erfasst werden und der Pumpstromwert (Ip) zum Zeitpunkt eines Nernst-Sprungs im Potentialverlauf der äußeren Pumpelektrode (APE) bei unterschiedlichen Werten des Referenzpumpstroms erfasst und bei einer Abweichung dieser Pumpstromwerte (Ip) um ein vorgebbares Maß auf eine Leitungsunterbrechung zu dem Abgleichwiderstand (R_{A}) geschlossen wird.

2. Verfahren nach Anspruch 1, **dadurch gekennzeichnet, dass** die Steigung des Spannungsverlaufs an der äußeren Pumpelektrode (APE) über der Luftzahl ausgewertet wird und auf einen Nernst-Sprung geschlossen wird, wenn die Steigung einen vorgebbaren Schwellenwert überschreitet.

3. Verfahren nach Anspruch 1 oder 2, **dadurch gekennzeichnet, dass** eine exponentielle Glättung mehrerer Pumpstromwerte zum Zeitpunkt eines Nernst-Sprungs bei jeweils gleichem Referenzpumpstrom erfolgt.

4. Verfahren nach einem der vorstehenden Ansprüche, **dadurch gekennzeichnet, dass** der Verlauf des Pumpstroms (Ip) jeweils getrennt bei Nernst-Sprüngen bei fett-mager-Durchgängen bzw. bei mager-fett-Durchgängen ausgewertet wird.

5. Verfahren nach Anspruch 4, **dadurch gekennzeichnet, dass** eine exponentielle Glättung mehrerer Pumpstromwerte zum Zeitpunkt eines Nernst-Sprungs bei gleichem Referenzpumpstrom jeweils bei fett-mager-Durchgängen bzw. mager-fett-Durchgängen getrennt erfolgt.

6. Verfahren zum Betreiben eines Sensorelements zur Bestimmung der Konzentration von Gaskomponenten im Abgas von Brennkraftmaschinen mit einer äußeren Pumpelektrode (APE), mit einer inneren Pumpelektrode oder Nernst-Elektrode (IPN) und mit einer Referenzelektrode (RE), wobei zwischen Pumpstromregler und der äußeren Pumpelektrode (APE) ein Messwiderstand (R_{M}) und ein dazu parallel geschalteter Abgleichwiderstand (R_{A}) vorgesehen sind, **dadurch gekennzeichnet, dass** ein Maß für die Höhe der Änderung des Referenzpumpstroms während der folgenden Schritte ermittelt wird:
- es wird die Pumpstromregelung angehalten;
- der Referenzpumpstrom wird um einen Betrag geändert;
- aus der Potentialänderung an der äußeren Pumpelektrode (APE) wird auf die Pumpstromänderung geschlossen und
- mit aktivierter Pumpstromregelung wird der Referenzpumpstrom um den gleichen Betrag geändert;
- die Änderung des Pumpstroms während eines Nernst-Sprungs wird erfasst und bei einer Abweichung der Pumpstromwerte um ein vorgebbares Maß wird auf eine Leitungsunterbrechung zu dem Abgleichwiderstand (R_{A}) geschlossen.

7. Verfahren nach Anspruch 6, **dadurch gekennzeichnet, dass** die Änderung des Referenzpumpstroms erfolgt, nachdem ein leicht mageres bzw. ein leicht fettes Gemisch im Abgas eingestellt wurde.

8. Verfahren nach Anspruch 6 oder 7, **dadurch gekennzeichnet, dass** die Änderung des Referenzpumpstroms in einem Betriebspunkt der Brennkraftmaschine mit geringem Abgasmassenstrom erfolgt.

9. Computerprogramm, das alle Schritte eines Verfahrens nach einem der Ansprüche 1 bis 5 oder 6 bis 8 ausführt, wenn es auf einem Rechengerät abläuft.

10. Computerprogrammprodukt mit Programmcode, das auf einem maschinenlesbaren Träger gespeichert ist, zur Durchführung des Verfahrens nach einem der Ansprüche 1 bis 5 oder 6 bis 8, wenn das Programm auf einem Computer, insbesondere einem Steuergerät einer Brennkraftmaschine ausgeführt wird.
